# EUROPÄISCHE PATENTSCHRIFT

(11) **EP 3 642 127 B1**
(45) Veröffentlichungstag und Bekanntmachung des Hinweises auf die Patenterteilung: **29.09.2021**
(21) Anmeldenummer: 18749162.6
(22) Anmeldetag: 19.06.2018
(51) Int. Cl.: B65D 39/00, B65D 51/24, C12G 1/08

(54) **STÖPSEL ZUM VERSCHLIESSEN EINER FLASCHE, INSBESONDERE ZUM VERSCHLIESSEN EINER EIN TRÜBES GETRÄNK ENTHALTENDEN FLASCHE**
PLUG FOR CLOSING A BOTTLE, IN PARTICULAR FOR CLOSING A BOTTLE WHICH CONTAINS A CLOUDY BEVERAGE
BOUCHON SERVANT À FERMER UNE BOUTEILLE, EN PARTICULIER SERVANT À FERMER UNE BOUTEILLE CONTENANT UNE BOISSON TROUBLE

(30) Priorität: 20.06.2017 IT 201700068058
(43) Veröffentlichungstag der Anmeldung: 29.04.2020
(73) Patentinhaber: Egger, Franz, 39044 Egna (BZ) (IT)
(72) Erfinder: Egger, Franz, 39044 Egna (BZ) (IT)
(86) Internationale Anmeldenummer: PCT/IT2018/000087
(87) Internationale Veröffentlichungsnummer: WO 2018/235115

(56) Entgegenhaltungen:
- EP-B1- 1 122 182
- DE-A1- 2 163 338
- DE-A1- 3 821 512
- DE-C1- 3 600 652
- GB-A- 808 600
- US-A- 2 418 630
- US-A- 4 932 543

## Beschreibung

### Technisches Gebiet

Die Erfindung betrifft einen Stöpsel zum Verschliessen einer Flasche, insbesondere einer ein trübes Getränk enthaltenden Flasche, gemäß dem Oberbegriff des Patentanspruches 1.

Ein trübes Getränk, insbesondere ein alkoholisches trübes Getränk, ergibt sich z.B. aus der Gärung eines Fruchtsaftes. In einem solchen Fall bilden die die Gärung verursachenden Mikroorganismen sowohl während der Gärung als auch insbesondere am Ende der Gärung Teilchen, die chaotisch in dem Getränk schwimmen und dadurch das Getränk trüben. Diese Mikroorganismen setzten sich wegen der Schwerkraft auf dem Boden der Flasche ab, wenn man dann aber die Flasche handhabt, z.B. um sie zu transportieren oder um das Getränk in ein Glas einzuschenken, neigen sie dazu sich vom Boden zu lösen und wieder mit dem Getränk zu vermischen.

Bei der Anwendung des traditionellen Verfahrens um die Teilchen von dem Getränk zu trennen, wird die Flasche zuerst in waagrechter Stellung aufbewahrt, damit die Teilchen sich aufgrund der Schwerkraft auf der Wandung der Flasche absetzten, und dann nach unten geneigt, d.h. die Flasche liegt schräg und die Flaschenöffnung ist nach unten gerichtet, damit, wiederum aufgrund der Schwerkraft, die Teilchenablagerungen längs der Wandung der Flasche fortschreitend in Richtung der Flaschenöffnung gleiten und sich dort sammeln. Nun wird die Flasche geöffnet und die Ablagerungen, die sich im Bereich der Flaschenöffnung angesammelt haben, werden durch verschiedene Verfahrensweisen entfernt, wobei danach die Flasche geschlossen wird. Da es sehr schwer ist alle sich bildenden Ablagerungen zu entfernen und die Öffnung der Flasche die Gefahr mit sich bringt, dass die restlichen Mikroorganismen, die noch in der Flasche enthalten sind, reaktiviert werden, wird, bevor man die Flasche wieder verschließt, dem in der Flasche enthaltenen Getränk Schwefeldioxid hinzugegeben, um zu verhindern dass die Gärung wieder starten kann, weil eine etwaige Weiterführung der Gärung das Getränk verändern würde. Das Hinzugeben des Schweldioxid bringt aber eine bedeutende Erhöhung der sich im Getränk befindlichen Sulfitmenge mit sich und das ist im Allgemeinen unerwünscht. Im Bereich der biologisch hergestellten Getränke ist wegen dieser Hinzufügung von Schweldioxid sogar die Einhaltung der sehr strengen Grenzen problematisch, die für diese Art von Produkten gelten.

### Stand der Technik

Das Dokument DE 3600652 C1 zeigt einen Stöpsel, der die Trennung der Teilchen von dem Getränk ermöglicht, ohne dass es zu diesem Zweck notwendig ist die Flasche zu öffnen und das macht es möglich, dass man dem Getränk nicht mehr Schweldioxid hinzugeben muss und dass man ein Getränk bekommt, das keine hinzugegebenen Sulfite aufweist.

Der Stöpsel der vorgeschlagen wird, setzt sich das Ziel, die das Getränk trübenden Teilchen in einem spezifischen Bereich des Stöpsels, nämlich in dem Hohlraum, zu sammeln und zu halten. Wenn sich die Flasche in der o.g. schrägen nach unten geneigten Stellung befindet, gleiten die Ablagerungen aufgrund der Schwerkraft längs der Wandung der Flasche in Richtung der Flaschenöffnung. Sie durchqueren die größere Öffnung des trichterförmigen Körpers und fangen an längs der geneigten Wandung des trichterförmigen Körpers zu gleiten und erreichen die kleinere Öffnung desselben, wobei beim Überschreiten dieser letzteren sie, wiederum aufgrund der Schwerkraft, in das Teil des Hohlraumes fallen, das sich zwischen der Oberfläche des Hohlraumes und der geneigten Wandung des trichterförmigen Körpers befindet. Dieses Teil des. Hohlraumes dient als Falle und weist einen ungefähren V-förmigen Querschnitt auf. Wenn danach die Flasche in senkrechter Stellung angeordnet wird, z.B. um transportiert, verkauft oder geöffnet zu werden, bleiben diese Ablagerungen, die sich in dem als Falle dienenden Teil des Hohlraumes befinden, zum größten Teil in diesem als Falle dienenden Teil des Hohlraumes. Anders ausgedrückt, ist ein Großteil dieser Ablagerungen nicht in der Lage längs der geneigten Wandungen des trichterförmigen Körpers hinaufzusteigen und in entgegengesetzter Richtung die kleinere Öffnung des trichterförmigen Körpers nochmals zu durchqueren, sondern sie sammeln sich auf dem Boden dieses als Falle dienenden Teils des Hohlraumes, d.h. sie sammeln sich in dem Bereich des unteren Scheitelpunktes des V, wo die geneigte Wandung des trichterförmigen Körpers sich an die Oberfläche des Hohlraumes anschließt und sie bleiben dann dort.

Wegen der Turbulenzen die in dem Getränk entstehen, wenn die Flasche senkrecht angeordnet wird, kann man nicht ausschließen, dass ein kleiner Anteil dieser Ablagerungen es schafft in entgegengesetzter Richtung die kleinere Öffnung des trichterförmigen Körpers nochmals zu durchqueren und dadurch in das Getränk zurückkommt.

Auch der Stöpsel gemäß einer der beiden Ausführungsformen des Dokuments US 2 418 630 A weist einen Hohlraum in dem die Teilchen gesammelt werden.

Ähnlich wie beim zuvor erläuterten Stöpsel des Dokuments DE 3600652 C1 ist vorgesehen, dass die Teilchen längs der schrägen Wände einer trichterförmigen Öffnung in den Hohlraum gelangen. Die trichterförmige Öffnung verbindet, zusammen mit einem Durchgangloch, den Hohlraum mit dem Flascheninnere.

In der anderen Ausführungsform des Dokuments US 2 418 630 A werden die Teilchen nicht in einem Hohlraum, sondern in einer Vielzahl von nebeneinander angeordneten Sacklöchern gesammelt.

Das Dokument US 4 932 543 A zeigt einen Stöpsel, der die Merkmale des Oberbegriffs des Patentanspruches 1 aufweist.

Dieser Stöpsel weist ein Einschubteil, das dazu bestimmt ist in den Flaschenhals einer Flasche eingeführt zu werden; Festhaltemittel, um den Stöpsel in Schließstellung zu halten; und einen trichterförmigen Körper, der eine erste und eine zweite Öffnung aufweist, von denen die erste größer als die zweite ist.

Das Einschubteil ist hohl, damit es mit einem Hohlraum versehen ist, der eine Eintrittsöffnung aufweist, und der trichterförmige Körper ist derart in dem Hohlraum angeordnet ist, dass seine kleinere Öffnung in den Hohlraum mündet. Auch im Fall dieses Stöpsels werden die Teilchen in der zuvor beschriebenen Weise in dem Hohlraum gesammelt.

Es ist zwar in dem Stöpsel ein weiterer Hohlraum erkennbar, aber dieser weitere Hohlraum ist nicht geeignet als zusätzlicher Sammelraum für die Teilchen zu dienen. Es handelt sich nämlich, um einen Hohlraum der eine Öffnung aufweist, die außerhalb des Stöpsels führt.

Es besteht also auch für diesen Stöpsel, die zuvor hinsichtlich des Stöpsels nach Dokument DE3600652 C1 erläuterte Verbesserungsbedürfnis.

### Darstellung der Erfindung

In diesem Zusammenhang besteht die der Erfindung zugrunde liegende Aufgabe darin, einen Stöpsel zur Verfügung zu stellen, der im Vergleich zu dem bekannten Stöpsel eine größere Leistungsfähigkeit aufweist und es ermöglicht die Teilchen definitiv von dem Getränk zu trennen. Erfindungsgemäß wird diese Aufgabe gelöst, wenn ein die in dem Oberbegriff des Patentanspruches 1 angegebenen Merkmale aufweisender Stöpsel zusätzlich auch die in dem kennzeichnenden Teil des Patentanspruches 1 angegebenen Merkmale aufweist.

Der erfindungsgemäße Stöpsel ist ein Stöpsel in dem ein zweistufiges Trennverfahren stattfindet, wobei ein Verfahrensschritt dem anderen folgt. In dem ersten Verfahrensschritt erreichen die Teilchen den Hohlraum und in dem zweiten Verfahrensschritt erreichen sie den in dem weiteren Teil des Stöpsels vorgesehenen weiteren Hohlraum. Da nur die Teilchen, die bereits in den Hohlraum gelangt sind, Zugang zu dem weiteren Hohlraum haben, erscheint ein etwaiger Umkehrweg seitens der Teilchen die sich in dem weiteren Hohlraum abgesetzt haben, d.h. ihr Zurückkommen in das Getränk, sehr problematisch und höchst unwahrscheinlich, sodass das Vorhandensein des weiteren Hohlraumes und der zum weiteren Hohlraum führenden Durchgangsöffnungen in effizienter Weise dazu beiträgt den Anteil der Teilchen zu erhöhen, die definitiv von dem Getränk getrennt werden. Der weitere Hohlraum vergrößert außerdem das Gesamtvolumen des Raumes innerhalb welches die Teilchenablagerungen zurückgehalten werden können. Die Tatsache, dass der Hohlraum sich auch in den weiteren Teil erstreckt, trägt dazu bei dieses Gesamtvolumen zu vergrößern, denn das verursacht eine Vergrößerung des Volumen des Hohlraumes. Die damit verbundene Steigerung der Dicke des weiteren Teiles kann vorteilhaft für einen anderen Aspekt ausgenutzt werden, denn wenn der weitere Teil angemessen gestaltet wird kann der Stöpsel den Eindruck erwecken, dass es sich um etwas Vornehmes und Bedeutendes handelt.

Gemäß Anspruch 2 ist der weitere Hohlraum konzentrisch zu dem Teil des Hohlraumes angeordnet, das sich in den weiteren Teil des Stöpsels erstreckt. Das ermöglicht es die Teilchen längs aller radialen Richtungen der Flasche abzusondern.

Falls, wie man in Anspruch 3 beansprucht, in das Teil des Hohlraumes das sich in den weiteren Teil erstreckt sich ein kegelförmiger Vorsprung erstreckt, der insbesondere in Richtung der Eintrittsöffnung des Hohlraumes hervorsteht, werden die das Getränk trübenden Teilchen dazu veranlasst, wobei ihnen auch geholfen wird, die Eintrittsöffnungen zu durchqueren die zu diesem weiteren Hohlraum führen.

Der Anspruch 4 betrifft die Merkmale des weiteren Teiles des Stöpsels, der größere Abmessungen als jene des Flaschenhalses der Flasche aufweist und eine Auflagefläche aufweist, mittels derer er, wenn der Stöpsel an der Flasche angebracht ist, auf den Wandungen des Flaschenhalses der Flasche aufliegt und diese schließt. In diesem Fall ist es möglich den Stöpsel, d.h. das Einschubteil, bis zum Ende in den Flaschenhals hineinzuschieben, ohne zu befürchten, dass er versehentlich zu tief hineingeschoben wird, weil die Auflagefläche des weiteren Teiles als Anschlagelement dient das die Einschubtiefe begrenzt. Der weitere Teil ist außerdem bei der Öffnung der Flasche behilflich, weil er ergriffen werden kann.

Anspruch 5 beansprucht die Merkmale einer ersten Ausführungsform der Festhaltemittel, um den Stöpsel in Schließstellung zu halten, gemäß welcher besagte Festhaltemittel aus einer Vielzahl von ringförmigen Vorsprüngen bestehen, die aus der äußeren seitlichen Oberfläche des Einschubteiles hervorstehen. Wenn der Stöpsel an der Flasche angebracht ist und diese schließt, haften diese ringförmigen Vorsprünge an der inneren Oberfläche des Flaschenhalses der Flasche an und sie halten das Einschubteil und daher den Stöpsel in Position innerhalb des Flaschenhalses. Wenn dann, wie man in Anspruch 6 beansprucht, einer der ringförmigen Vorsprünge bündig mit dem unteren Rand des Einschubteiles angeordnet ist, wird verhindert dass es zwischen den Wandungen des Flaschenhalses und den Wandungen des Einschubteiles einen Freiraum gibt, in dem sich Ablagerungen sammeln können.

Die o.g. ringförmigen Vorsprünge sind in der Lage den Stöpsel in Schließstellung zu halten, wenn in der Flasche ein Druck vorhanden ist der nicht stärker als der Luftdruck ist oder ein Druck vorhanden ist der nicht besonders stark ist, z.B. der Druck eines spritzigen Weines. In den Fällen in denen stattdessen das Getränk durch eine Gärung innerhalb einer geschlossenen Flasche erhalten wurde, man siehe z.B. den Spumante, den Champagner und auch die Obstschaumweine, verlangt der innerhalb der Flasche vorhandene Druck die Verwendung von Festhaltemitteln, die den vom Druck auf dem Stöpsel ausgeübten Schub besser entgegenwirken als es die ringförmigen Vorsprünge tun. Anspruch 7 beansprucht die Merkmale einer zweiten Ausführungsform der Festhaltemittel um den Stöpsel in Schließstellung zu halten, gemäß welcher besagte Festhaltemittel aus einem aus Draht gebildeten Käfig bestehen. Wenn der Stöpsel an der Flasche angebracht ist und diese schließt, ist dieser aus Draht gebildete Käfig um den weiteren Teil herum angeordnet und an dem Flaschenhals der Flasche verankert, sodass er das darunterliegende Einschubteil und daher den Stöpsel in Position innerhalb des Flaschenhalses hält.

Gemäß Anspruch 8 ist es bevorzugt, dass in der Wandung des trichterförmigen Körpers zumindest ein Durchgangsloch vorgesehen ist. Diesem Durchgangsloch ist es zu verdanken, dass die Gärungsgase, die sich eventuell noch in dem Hohlraum befinden, aus dem Hohlraum austreten können, während die Flasche sich noch in der o.g. schrägen nach unten geneigten Stellung befindet und so den Raum des Hohlraumes für die Teilchenablagerungen frei lassen, die stattdessen in Richtung des Hohlraumes gleiten um in ihn einzudringen. Durch dieses Durchgangsloch hindurch können sich die restlichen Gärungsgase auf dem Boden der Flasche ansammeln, der, wenn die Flasche nach unten geneigt ist, sich stattdessen oben befindet.

Falls, wie man in Anspruch 9 beansprucht, der trichterförmige Körper bei der Eintrittsöffnung des Hohlraumes an der Oberfläche des Hohlraumes befestig ist, wird die Bildung einer Stufe zwischen der Oberfläche des Hohlraumes und der Oberfläche des trichterförmigen Körpers verhindert, wobei die Stufe ein Hindernis darstellen könnte und die Bildung von schwer entfernbaren örtlichen Ablagerungen verursachen könnte. Den in diesem Anspruch 9 beanspruchten Merkmalen ist es hingegen zu verdanken, dass die Ablagerungen nicht längs der Oberfläche des Hohlraumes gleiten müssen, sondern sich direkt von den Wandungen der Flasche zu den geneigten Wandungen des trichterförmigen Körpers begeben können.

### Kurze Beschreibung der Zeichnungen

Weitere Vorteile und Merkmale der Erfindung gehen aus der folgenden Beschreibung von Ausführungsbeispielen des erfindungsgemäßen Stöpsels hervor, die anhand der beigelegten Zeichnungen rein beispielhaft aber nicht in einschränkender Weise erläutert werden.

In den Figuren zeigen:
die **Fig. 1** perspektivisch ein erstes Ausführungsbeispiel des erfindungsgemäßen Stöpsels, bei dem eine erste Ausführungsform der Festhaltemittel vorgesehen ist;
die **Fig. 2** eine Längsschnittdarstellung des Stöpsels der Fig. 1 wenn er an einer Flasche angebracht ist;
die **Fig. 3** eine der Fig. 2 ähnliche Längsschnittdarstellung eines zweiten Ausführungsbeispiels des erfindungsgemäßen Stöpsels wenn er an einer Flasche angebracht ist, wobei in diesem Fall eine zweite Ausführungsform der Festhaltemittel vorgesehen ist;
die **Fig. 4** das in Fig. 3 dargestellte Ausführungsbeispiel, wenn die Flasche nach unten geneigt ist.

### Bester Weg zur Ausführung der Erfindung

In den Figuren ist ein Stöpsel 1 zum Verschliessen einer Flasche, insbesondere einer ein trübes Getränk enthaltenden Flasche, dargestellt. Er 1 umfasst ein Einschubteil 1a, das dazu bestimmt ist in den Flaschenhals 10 einer Flasche eingeführt zu werden, und Festhaltemittel 2;3, um den Stöpsel 1 in Schließstellung zu halten, wenn er an der Flasche angebracht ist.

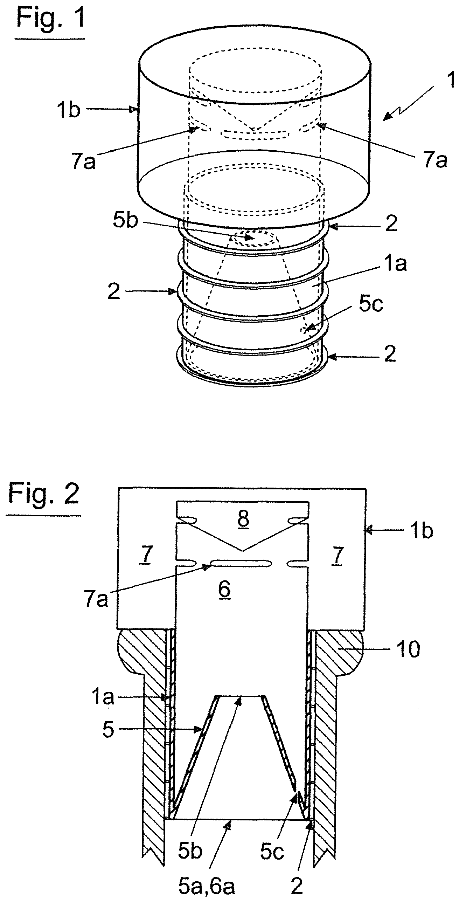

Wie man z.B. in der Fig. 2 dargestellt hat, umfasst der Stöpsel 1 auch einen trichterförmigen Körper 5. Der trichterförmige Körper 5 weist eine erste 5a und eine zweite Öffnung 5b auf, von denen die größere mit dem Bezugszeichen 5a und die kleinere mit dem Bezugszeichen 5b gekennzeichnet ist. Der trichterförmige Körper 5 ist innerhalb des Einschubteiles 1a und zwar in einem Hohlraum 6 desselben 1a angeordnet. Das Einschubteil 1a weist die Form eines Zylinders auf, der hohl ist, damit das Einschubteil 1a mit dem Hohlraum 6 versehen ist, und an einer Basis offen ist, damit der Hohlraum 6 eine Eintrittsöffnung 6a aufweist.

Der trichterförmige Körper 5 ist mittels seines die größere Öffnung 5a begrenzenden Randes an der Oberfläche des Hohlraumes 6 befestigt und derart in dem Hohlraum 6 angeordnet, dass seine kleinere Öffnung 5b in den Hohlraum 6 mündet.

In der Wandung des trichterförmigen Körpers 5 ist zumindest ein Durchgangsloch 5c vorgesehen, man siehe z.B. die Fig. 2. In der gleichen Figur kann man außerdem sehen, dass der trichterförmige Körper 5 bei der Eintrittsöffnung 6a des Hohlraumes 6 an der Oberfläche des Hohlraumes 6 befestig ist.

Der Stöpsel 1 umfasst auch einen mit einem weiteren Hohlraum 7 versehenen weiteren Teil 1b, der Abmessungen aufweist, die größer als jene des Flaschenhalses 10 der Flasche sind. Dieser weitere Teil 1b weist auch eine Auflagefläche auf, mittels derer er 1b, wenn der Stöpsel 1 an der Flasche angebracht ist und diese schließt, auf den Wandungen des Flaschenhalses 10 der Flasche aufliegt.

Wie man in den Figuren dargestellt hat, erstreckt sich der Hohlraum 6 auch in den weiteren Teil 1b des Stöpsels 1, während der sich in dem weiteren Teil 1b befindliche weitere Hohlraum 7 konzentrisch zu dem Teil des Hohlraumes 6 angeordnet ist, das sich in den weiteren Teil 1b erstreckt.

In der Wandung, die das Teil des Hohlraumes 6 begrenzt das sich in den weiteren Teil 1b erstreckt, ist eine Vielzahl von Durchgangsöffnungen 7a vorgesehen, die zu dem weiteren Hohlraum 7 führen, sodass, ausgehend von dem Hohlraum 6, der weitere Hohlraum 7 durch diese Durchgangsöffnungen 7a hindurch zugänglich ist. In den Figuren kann man sehen, dass in das Teil des Hohlraumes 6, das sich in den weiteren Teil 1b erstreckt, sich ein kegelförmiger Vorsprung 8 erstreckt. Dieser Vorsprung 8 steht in Richtung der Eintrittsöffnung 6a des Hohlraumes 6 hervor.

In dem in den Fig. 1 und 2 dargestellten Ausführungsbeispiel bestehen die Festhaltemittel, um den Stöpsel 1 in Schließstellung zu halten, aus einer Vielzahl von ringförmigen Vorsprüngen 2. Diese ringförmigen Vorsprünge 2 stehen aus der äußeren seitlichen Oberfläche des Einschubteiles 1a hervor und sie haften, wenn der Stöpsel 1 an der Flasche angebracht ist und diese schließt, an der inneren Oberfläche des Flaschenhalses 10 der Flasche an. Einer der ringförmigen Vorsprünge 2 ist bündig mit dem unteren Rand des Einschubteiles 1a angeordnet.

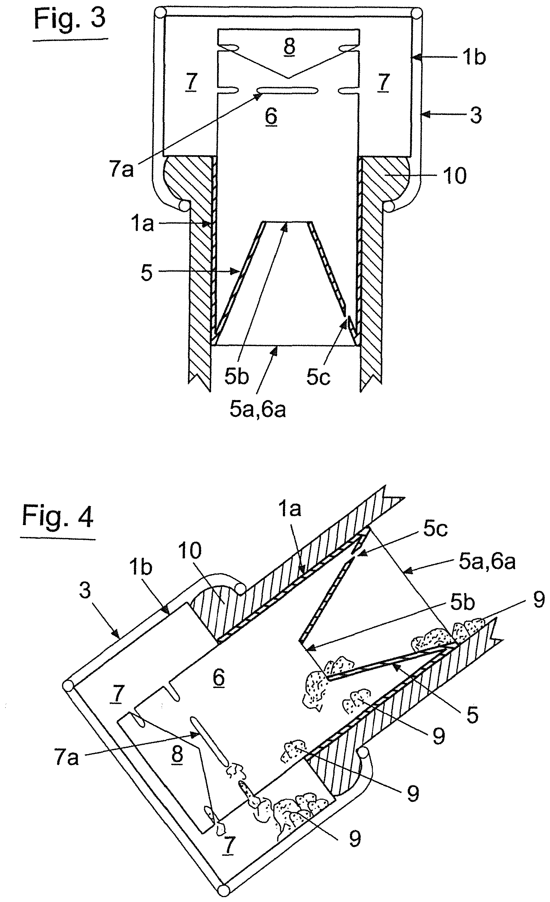

In den Fig. 3 und 4 ist hingegen ein zweites Ausführungsbeispiel des Stöpsels 1 dargestellt, das sich vom vorherigen Ausführungsbeispiel dadurch unterscheidet, dass es anstelle der ringförmigen Vorsprünge 2 Festhaltemittel 3, um den Stöpsel 1 in Schließstellung zu halten, aufweist, die aus einem aus Draht gebildeten Käfig 3 bestehen. Wenn der Stöpsel 1 an der Flasche angebracht ist und diese schließt, ist der aus einem Draht gebildete Käfig um den weiteren Teil 1b herum angeordnet und an dem Flaschenhals 10 der Flasche verankert.

Die Arbeitsweise des erfindungsgemäßen Stöpsels 1 ist wie folgt.

Wie man bereits erläutert hat, dient der Stöpsel 1 dazu von einem, in einer von dem Stöpsel 1 verschlossenen Flasche enthaltenen Getränk die das Getränk trübenden Teilchen definitiv zu trennen. Definitiv trennen heißt, dass wenn die Flasche von der nach unten geneigten Stellung, in der die Trennung der Teilchen stattfindet, in die senkrechte Stellung gebracht wird, in der sie transportiert oder geöffnet wird, die Teilchenablagerungen nicht in der Lage sind in das Getränk zurückzukommen.

Um die Teilchen abzusondern, wird die Flasche, so wie es in dem traditionellen Verfahren geschieht, in einer nach unten geneigten Stellung angeordnet, d.h. der Stöpsel 1 befindet sich im Vergleich zum Boden der Flasche weiter unten, wie man in der Fig. 4 dargestellt hat, auf die man sich in der Folge beziehen wird.

Abhängig von dem sich innerhalb der Flasche befindlichen Druck und von Handelsentscheidungen, kann der in den Flaschenhals 10 der Flasche eingeführte Stöpsel 1 als Festhaltemittel die ringförmigen Vorsprünge 2 (kein oder schwacher Druck) oder den aus Draht gebildeten Käfig 3 (hoher Druck) aufweisen. in der Fig. 4 ist z.B. eine Flasche mit dem den aus Draht gebildeten Käfig 3 aufweisenden Stöpsel 1 dargestellt.

In dieser bekannten nach unten geneigten Stellung fallen die Teilchen aufgrund der Schwerkraft in Richtung der inneren Oberfläche der Flasche, auf der sie sich absetzten und eine Teilchenschicht 9 bilden. Diese Teilchenschicht 9 gleitet dann längs der Wandung der Flasche bis zur größeren Öffnung 5a des trichterförmigen Körpers 5. Ab hier gleitet die Teilchenschicht 9 längs der geneigten Wandung des trichterförmigen Körpers bis zu dessen 5 kleineren Öffnung 5b. Nachdem die Teilchen auch die kleinere Öffnung 5b überschritten haben, treten sie 9 in den Hohlraum 6 hinein und fallen, aufgrund der Schwerkraft, in Richtung der Oberfläche des Hohlraumes 6, auf der sie sich absetzten. Restliche etwaige Gärungsgase oder Gärungsgase die aus der Teilchenschicht 9 stammen und naturgemäß dazu neigen nach oben zu steigen, durchqueren inzwischen das Durchgangsloch 5c. Nachdem sie auch die größere Öffnung 5a des trichterförmigen Körpers 5 überschritten haben (in den Figuren ist der trichterförmige Körper 5 stets in seiner vorzuziehenden Stellung dargestellt, in der seine größere Öffnung 5a und die Eintrittsöffnung 6a des Hohlraumes 6 übereinanderliegen), sammeln sich diese Gase auf dem (nicht dargestellten) Boden der Flasche und lassen den Hohlraum 6 leer. In dieser Situation, wenn man die Flasche in senkrechte Stellung stellen würde, würde die sich auf der Oberfläche des Hohlraumes 6 abgesetzte Teilchenschicht 9 zum größten Teil in Richtung des Scheitelpunktes des Teiles des Hohlraumes 6 gleiten, das den V-förmigen Querschnitt aufweist und hätte keine Möglichkeit mehr in das Getränk zurückzukommen. Die Teilchen 9 dieser Schichten sind daher definitiv vom Getränk getrennt worden.

Wird aber die Flasche in geneigter Stellung gelassen, gleitet die Teilchenschicht 9 längs der Oberfläche des Hohlraumes 6 weiter bis sie die geneigte Wandung des kegelförmigen Körpers 8 erreicht, die ein Hindernis bildet das die Teilchen in Richtung der Durchgangsöffnungen 7a ablenkt, wobei nach der Überschreitung dieser Durchgangsöffnungen die Teilchen 9 sich in dem weiteren Hohlraum 7 befinden. In dieser Situation, wenn man die Flasche in senkrechte Stellung stellen würde, wäre die sich auf der Oberfläche des weiteren Hohlraumes 7 abgesetzte Teilchenschicht 9 in dem weiteren Hohlraumes 7 eingeschlossen, denn sie wäre nicht in der Lage zu den Durchgangsöffnungen 7a zu gelangen, die, wenn die Flasche sich in senkrechter Stellung befindet, sich an einer höher gelegenen Stellung als jene der sich auf dem Boden des weiteren Hohlraumes 8 befindlichen Teilchenschicht 9 befinden.

Die Tatsache dass viele Teilchen 9 absolut sicher in dem weiteren Hohlraum 7 eingeschlossen werden, reduziert sehr, im Vergleich zu der bekannten Technik, die Menge der Teilchen 9 die in der zuvor erläuterten Weise in dem Hohlraum 6 eingeschlossen werden. Folglich durchquert nur ein minimaler und unbedeutender Anteil der sich insgesamt in dem Stöpsel 1, in den beiden Kammern 6 und 7, abgesetzten Teilchen 9 die kleinere Öffnung 5b und die größere Öffnung 5a, um sich mit dem Getränk wieder zu vereinen.

## Patentansprüche

1. Stöpsel (1) zum Verschliessen einer Flasche, insbesondere einer ein trübes Getränk enthaltenden Flasche, umfassend:
. ein Einschubteil (1a), das dazu bestimmt ist in den Flaschenhals (10) einer Flasche eingeführt zu werden;
. Festhaltemittel (2;3), um den Stöpsel (1) in Schließstellung zu halten;
. einen trichterförmigen Körper (5), der eine erste (5a) und eine zweite Öffnung (5b) aufweist, von denen die erste (5a) größer als die zweite (5b) ist, wobei das Einschubteil (1a) die Form eines Zylinders aufweist, der hohl ist, damit das Einschubteil (1a) mit einem Hohlraum (6) versehen ist, und an einer Basis offen ist, damit der Hohlraum (6) eine Eintrittsöffnung (6a) aufweist, und wobei der trichterförmige Körper (5) mittels seines die größere Öffnung (5a) begrenzenden Randes an der Oberfläche des Hohlraumes (6) befestigt ist und derart in dem Hohlraum (6) angeordnet ist, dass seine kleinere Öffnung (5b) in den Hohlraum (6) mündet; und
. einen mit einem weiteren Hohlraum (7) versehenen weiteren Teil (1b), wobei der Hohlraum (6) sich auch in den weiteren Teil (1b) des Stöpsels (1) erstreckt, **dadurch gekennzeichnet, dass**
. in der Wandung, die das Teil des Hohlraumes (6) begrenzt das sich in den weiteren Teil (1b) erstreckt, eine Vielzahl von Durchgangsöffnungen (7a) vorgesehen ist, die zu dem weiteren Hohlraum (7) führen, sodass, ausgehend von dem Teil des Hohlraumes (6) das sich in den weiteren Teil (1b) erstreckt, der weitere Hohlraum (7) durch diese Durchgangsöffnungen (7a) hindurch zugänglich ist.

2. Stöpsel (1) nach Anspruch 1, **dadurch gekennzeichnet dass** der weitere Hohlraum (7) konzentrisch zu dem Teil des Hohlraumes (6) angeordnet ist, das sich in den weiteren Teil (1b) erstreckt.

3. Stöpsel (1) nach Anspruch 2, **dadurch gekennzeichnet dass** in das Teil des Hohlraumes (6) das sich in den weiteren Teil (1b) erstreckt, sich ein kegelförmiger Vorsprung (8) erstreckt, der in Richtung der Eintrittsöffnung (6a) des Hohlraumes (6) hervorsteht.

4. Stöpsel (1) nach einem der Ansprüche von 1 bis 3, **dadurch gekennzeichnet dass** der weitere Teil (1b) Abmessungen aufweist, die größer als jene des Flaschenhalses (10) der Flasche sind, und eine Auflagefläche aufweist, mittels derer er (1b), wenn der Stöpsel (1) an der Flasche angebracht ist, auf den Wandungen des Flaschenhalses (10) der Flasche aufliegt.

5. Stöpsel (1) nach einem der Ansprüche von 1 bis 4, **dadurch gekennzeichnet dass** die Festhaltemittel, um den Stöpsel (1) in Schließstellung zu halten, aus einer Vielzahl von ringförmigem Vorsprüngen (2) bestehen, die (2) aus der äußeren seitlichen Oberfläche des Einschubteiles (1a) hervorstehen und, wenn der Stöpsel (1) an der Flasche angebracht ist und diese schließt, an der inneren Oberfläche des Flaschenhalses (10) der Flasche anhaften.

6. Stöpsel (1) nach Anspruch 5, **dadurch gekennzeichnet dass** einer der ringförmigen Vorsprünge (2) bündig mit dem unteren Rand des Einschubteiles (1a) angeordnet ist.

7. Stöpsel (1) nach einem der Ansprüche von 1 bis 4, **dadurch gekennzeichnet dass** die Festhaltemittel, um den Stöpsel (1) in Schließstellung zu halten, aus einem aus Draht gebildeten Käfig (3) bestehen, der, wenn der Stöpsel (1) an der Flasche angebracht ist und diese schließt, um den weiteren Teil (1b) herum angeordnet ist und an dem Flaschenhals (10) der Flasche verankert ist.

8. Stöpsel (1) nach einem der Ansprüche von 1 bis 7, **dadurch gekennzeichnet dass** in der Wandung des trichterförmigen Körpers (5) zumindest ein Durchgangsloch (5c) vorgesehen ist.

9. Stöpsel (1) nach einem der Ansprüche von 1 bis 8, **dadurch gekennzeichnet dass** der trichterförmige Körper (5) bei der Eintrittsöffnung (6a) des Hohlraumes (6) an der Oberfläche des Hohlraumes (6) befestig ist.

## Claims

1. Plug (1) for closing a bottle, in particular for closing a bottle which contains a cloudy beverage, comprising:
- an inserting part (1a), intended to be inserted in the bottleneck (10);
- fastening means (2;3) for holding the plug (1) in a closed position;
- a funnel-shaped body (5) with a first (.5a) and a second opening (5b), of which the first (5a) is greater than the second (5b), the inserting part (1a) having the shape of a cylinder, which is hollow, so that the inserting part (1a) is equipped with a recess (6), and opened on its base, so that the recess (6) has an input opening (6a), and the funnel-shaped body (5) being fastened, by means of its edge delimiting the greater opening (5a), to the surface of the recess (6) and being arranged inside the recess (6) so that its minor opening (5b) opens in the recess (6); and
- an additional part (1b) equipped with an additional recess (7), the recess (6) extending also in the additional part (1b) of the plug (1), **characterised in that** in the wall delimiting the part of the recess (6) that extends in the additional part (1b) is provided a plurality of passing openings (7a) which lead to the additional recess (7), so that starting from the part of the recess (6) that extends in the additional part (1b) the additional recess (7) is accessible through these passing openings (7a).

2. Plug (1) according to claim 1, **characterised in that** the additional recess (7) is arranged concentrically with respect to the part of the recess (6) that extends in the additional part (1b).

3. Plug (1) according to claim 2, **characterised in that** in the part of the recess (6) that extends in the additional part (1b) extends a cone-shaped-protrusion (8), which protrudes towards the input opening (6a) of the recess (6).

4. Plug (1) according to one of the claims 1 to 3, **characterised in that** the additional part (1b), has greater sizes than the bottleneck (10) and a resting surface, with which it (1b) rests on the walls of the bottleneck (10) when the plug (1) is applied to the bottle and closes it.

5. Plug (1) according to one of the claims 1 to 4, **characterised in that** the fastening means for holding the plug (1) in the closed position consist of a plurality of annular protrusions (2), which (2) protrude from the external lateral surface of the inserting part (1a) and, when the plug (1) is applied to the bottle and closes it, adhere to the internal surface of the bottleneck (10).

6. Plug (1) according to claim 5, **characterised in that** one of the annular protrusions (2) is arranged flushed with the lower edge of the inserting part (1a).

7. Plug (1) according to one of the claims 1 to 4, **characterised in that** the fastening means for holding the plug (1) in the closed position consist of a little wire cage (3), which, when the plug (1) is applied to the bottle and closes it, is arranged around the additional part (1b) and anchored to the bottleneck (10).

8. Plug (1) according to one of the claims 1 to 7, **characterised in that** in the wall of the funnel-shaped body (5) at least one through-hole (5c) is provided.

9. Plug (1) according to one of the claims 1 to 8, **characterised in that** the funnel-shaped body (5) is fastened to the surface of the recess (6) next to the input opening (6a) of the recess (6).

## Revendications

1. Bouchon (1) servant à fermer une bouteille, en particulier une bouteille contenant une boisson trouble, comprenant :
- une partie d'insertion (1a), destinée à être insérée dans le goulot (10) de la bouteille ;
- des moyens de fixage (2;3) pour maintenir en position de fermeture le bouchon (1);
- un corps en forme d'entonnoir (5), lequel présente une première (5a) et une deuxième ouverture (5b), dont la première (5a) est plus grande que la deuxième (5b), la partie d'insertion (1a) ayant la forme d'un cylindre qui est vide, afin que la partie d'insertion (1a) soit pourvue d'une cavité (6), et ouvert sur l'une de ses bases, afin que la cavité (6) ait une ouverture d'entrée (6a), et le corps en forme d'entonnoir (5) étant fixé, au moyen de son bord qui délimite son ouverture la plus grande (5a), à la surface de la cavité (6) et étant disposé de telle manière dans la cavité (6) que son ouverture la plus petite (5b) débouche sur la cavité (6) ; et
- une autre partie (1b) pourvue d'une autre cavité (7), la cavité (6) s'étendant également dans l'autre partie (1b) du bouchon (1), **caractérisé en ce que** dans la paroi qui délimite la partie de cavité (6) qui s'étend dans l'autre partie (1b) une pluralité d'ouvertures de passage (7a) sont prévues qui mènent à l'autre cavité (7), de sorte que, en partant de la partie de cavité (6) qui s'étend dans l'autre partie (1b), l'autre cavité (7) est accessible par ces ouvertures de passage (7).

2. Bouchon (1) selon la revendication 1, **caractérisé en ce que** l'autre cavité (7) est disposée de façon concentrique par rapport à la partie de cavité (6) qui s'étend dans l'autre partie (1b).

3. Bouchon (1) selon la revendication 2, **caractérisé en ce que** dans la partie de cavité (6) qui s'étend dans l'autre partie (1b), s'étend une saillie en forme de cône (8), laquelle fait saillie vers l'ouverture d'entrée (6a) de la cavité (6).

4. Bouchon (1) selon l'une des revendications 1 à 3, **caractérisé en ce que** l'autre partie (1b) a des dimensions plus grandes que celles du goulot (10) de la bouteille et une surface d'appui, avec laquelle elle (1b) appuie sur les parois du goulot (10) de la bouteille lorsque le bouchon (1) est appliqué à la bouteille et la ferme.

5. Bouchon (1) selon l'une des revendications 1 à 4, **caractérisé en ce que** les moyens de fixage pour maintenir en position de fermeture le bouchon (1) consistent en une pluralité de saillies annulaires (2), lesquelles (2) font saillie de la surface latérale externe de la partie d'insertion (1a) et, lorsque le bouchon (1) est appliqué à la bouteille et la ferme, elles adhèrent à la surface interne du goulot (10) de la bouteille.

6. Bouchon (1) selon la revendication 5, **caractérisé en ce que** l'une des saillies annulaires (2) est disposée au niveau du bord inférieur de la partie d'insertion (1a).

7. Bouchon (1) selon l'une des revendications 1 à 4, **caractérisé en ce que** les moyens de fixage pour maintenir en position de fermeture le bouchon (1) consistent en une cage en fil métallique (3), laquelle, lorsque le bouchon (1) est appliqué à la bouteille et la ferme, est disposée autour de l'autre partie (1b) et ancrée au goulot (10) de la bouteille.

8. Bouchon (1) selon l'une des revendications 1 à 7, **caractérisé en ce qu'**au moins un trou de passage (5c) est prévu dans la paroi du corps en forme d'entonnoir (5).

9. Bouchon (1) selon l'une des revendications 1 à 8, **caractérisé en ce que** le corps en forme d'entonnoir (5) est fixé à la surface de la cavité (6) au niveau de l'ouverture d'entrée (6a) de la cavité (6).
